# EUROPEAN PATENT APPLICATION

(11) **EP 4 589 923 A1**
(43) Date of publication of application: **23.07.2025**
(21) Application number: 23868568.9
(22) Date of filing: 19.09.2023
(51) Int. Cl.: H04L 67/00, G06F 8/71, G06F 8/61, G06F 9/445, H04L 101/654

(54) **CUSTOMIZING SOFTWARE PROVISION DEVICE AND METHOD**

(30) Priority: 19.09.2022 KR 20220117790; 30.09.2022 KR 20220125212
(71) Applicant: Samsung Electronics Co., Ltd., Suwon-si, Gyeonggi-do 16677 (KR)
(72) Inventor: KIM, Youngjoo, Suwon-si, Gyeonggi-do 16677 (KR); LEE, Jeongho, Suwon-si, Gyeonggi-do 16677 (KR); KANG, Kyunam, Suwon-si, Gyeonggi-do 16677 (KR); KIM, Soomin, Suwon-si, Gyeonggi-do 16677 (KR); SOHN, Dongjin, Suwon-si, Gyeonggi-do 16677 (KR)
(74) Representative: Gulde & Partner
(86) International application number: PCT/KR2023/014200
(87) International publication number: WO 2024/063516

(57) **Abstract**

A customizing software provision device according to one embodiment comprises a communication module, a memory and a processor, wherein the memory can store instructions configured such that, during execution thereof, the processor: receives device information and software information of an electronic device through the communication module; identifies, on the basis of the device information and the software information of the electronic device, whether there is a designated provider associated with the electronic device; provides first software information to the electronic device if there is a designated provider; provides the first software information to the electronic device upon non-approval of the provider on the basis of whether the designated provider has been approved, if there is a designated provider; and provides, upon approval of the provider, to the electronic device, second software information obtained by customizing first software according to a request of the designated provider.

## Description

### [Technical Field]

The disclosure relates to a software providing device and method.

### [Background Art]

With the development of electronic information and communication technologies, various functions are being integrated into communication devices or electronic devices, and electronic devices are being implemented to be able to perform an interworking function for interworking with other electronic devices via communication. For example, electronic devices (e.g., mobile terminals, tablet terminals, or wearable electronic devices) are being developed to have various other functions as well as the communication function through software installation. Electronic devices may perform new, extended, or modified functions by installing additional software in addition to default software installed at the time of manufacture.

### [Detailed Description of the Invention]

### [Technical Problem]

An electronic device may be equipped with basic software (e.g., firmware) when manufactured or shipped out and may require installation of additional software depending on the operator (e.g., network operator or communication network operator) associated with the electronic device when registering in the network or the communication area (e.g., the country or zone) of the electronic device to be able to perform communication.

The additional software to be installed on the electronic device may be required to reflect different requirements for each electronic device-associated network operator or each electronic device communication area. For example, a software provider (e.g., a software providing device) may obtain and store software (e.g., customizing software or operator-oriented software) customized into the version of each network operator from the default software according to the request of each network operator in a designated communication area after issuing additional software (e.g., default software or open-type software) corresponding to the designated communication area. For example, after issuing first default software corresponding to a first communication area, the software provider may obtain and store first customizing software obtained by customizing first software according to a request of a first network operator of the first communication area and obtain and store second customizing software obtained by customizing the first software according to a request of a second network operator of the first communication area.

The customizing software according to the request of the network operator may require a process in which the network operator identifies and approve whether the requirements are well reflected. If there is no process for identifying whether to approve the customizing software by the network operator, the software provider may provide the customizing software to the electronic device regardless of whether the network operator approve it. When the customizing software is provided to the electronic device in a state in which the customizing software is not approved by the network operator, if an error occurs in the non-approved customizing software, the software provider may be liable for it. When it is waited to complete the network operator's approval for the customizing software, if approval is delayed, supply of the customizing software by the software provider may be delayed too. When approval for the customizing software is rejected by the network operator or an additional customizing request is generated for the customizing software, costs may be incurred due to the additional customizing work.

### [Technical Solution]

A device for providing customizing software according to an embodiment may comprise a communication module, memory, and a processor. The memory according to an embodiment may store instructions configured to, when executed, enable the processor to receive device information and software information about an electronic device through the communication module. The memory according to an embodiment may store instructions configured to, when executed, enable the processor to identify whether there is a designated operator associated with the electronic device based on the device information and the software information about the electronic device. The memory according to an embodiment may store instructions configured to, when executed, enable the processor to, in case that there is not the designated operator, provide first software information to the electronic device. The memory according to an embodiment may store instructions configured to, in case that there is the designated operator, based on whether to be approved by the designated operator, provide the first software information to the electronic device upon non-operator approval and provide the electronic device with second software information obtained by customizing the first software based on a request of the designated operator upon operator approval.

An electronic device according to an embodiment may comprise a communication module, memory, and a processor. The memory according to an embodiment may store instructions configured to, when executed, enable the processor to transmit device information and software information about an electronic device to a software providing device through the communication module. The memory according to an embodiment may store instructions configured to, when executed, enable the processor to receive software information corresponding to the device information and the software information about the electronic device from the software providing device. The memory according to an embodiment may store instructions configured to, when executed, enable the processor to identify whether the received software information is first software information or second software information customized for the first software based on a request of a designated operator. The memory according to an embodiment may store instructions configured to, when executed, enable the processor to install first software based on the first software information or install second software based on the second software information.

In a non-volatile storage medium storing instructions according to an embodiment, the instructions are configured to, when executed by an electronic device, enable the electronic device to perform at least one operation, and the at least one operation may comprise receiving device information and software information about an electronic device through the communication module, identifying whether there is a designated operator associated with the electronic device based on the device information and the software information about the electronic device, in case that there is not the designated operator, providing first software information to the electronic device, and in case that there is the designated operator, based on whether to be approved by the designated operator, providing the first software information to the electronic device upon non-operator approval and providing the electronic device with second software information obtained by customizing the first software based on a request of the designated operator upon operator approval.

### [Advantageous Effects]

According to an embodiment of the disclosure, there may be provided a process for identifying whether customizing software is approved according to a request of a network operator.

According to an embodiment of the disclosure, it is possible to prevent customizing software from being provided to an electronic device in a state in which the customizing software is not approved by the network operator.

According to an embodiment of the disclosure, it is possible to provide customizing software when the customizing software is approved after providing default software instead of the customizing software although approval for the customizing software by the network operator is delayed.

According to an embodiment of the disclosure, although approval for the customizing software by the network operator is rejected, or an additional customizing request is generated for the customizing software, the load of the additional customizing work may be reduced because modification of the customizing software may be performed in a state in which the default software is provided.

### [Brief Description of the Drawings]

FIG. 1 is a block diagram illustrating an electronic device in a network environment according to an embodiment;
FIG. 2 is a view illustrating an example of a configuration of an electronic device and a software providing system according to an embodiment;
FIG. 3 is a block diagram illustrating a software providing device according to an embodiment;
FIG. 4 is a flowchart illustrating an example of a software providing operation according to an embodiment;
FIG. 5 is a flowchart illustrating an example of a software providing operation based on a software version of an electronic device according to an embodiment;
FIG. 6 is a flowchart illustrating an example of an operation of receiving and installing software from an electronic device according to an embodiment;
FIG. 7A is a view illustrating a first screen displayed when default software is installed on an electronic device according to an embodiment;
FIG. 7B is a view illustrating a second screen displayed when customizing software is installed on an electronic device according to an embodiment;
FIG. 8A is a view illustrating a first home screen background and a first app arrangement displayed when default software is installed on an electronic device according to an embodiment; and
FIG. 8B is a view illustrating a second home screen background and a second app arrangement displayed when customizing software is installed on an electronic device according to an embodiment.

### [Mode for Carrying out the Invention]

Various embodiments of the present disclosure are now described with reference to the accompanying drawings. As used herein, the term "user" may denote a human or another device using the electronic device.

The terms as used herein are provided merely to describe some embodiments thereof, but not to limit the scope of other embodiments of the present disclosure. It is to be understood that the singular forms "a," "an," and "the" include plural references unless the context clearly dictates otherwise. All terms including technical and scientific terms used herein have the same meaning as commonly understood by one of ordinary skill in the art to which the embodiments of the present disclosure belong. It will be further understood that terms, such as those defined in commonly used dictionaries, should be interpreted as having a meaning that is consistent with their meaning in the context of the relevant art and will not be interpreted in an idealized or overly formal sense unless expressly so defined herein. In some cases, the terms defined herein may be interpreted to exclude embodiments of the present disclosure.

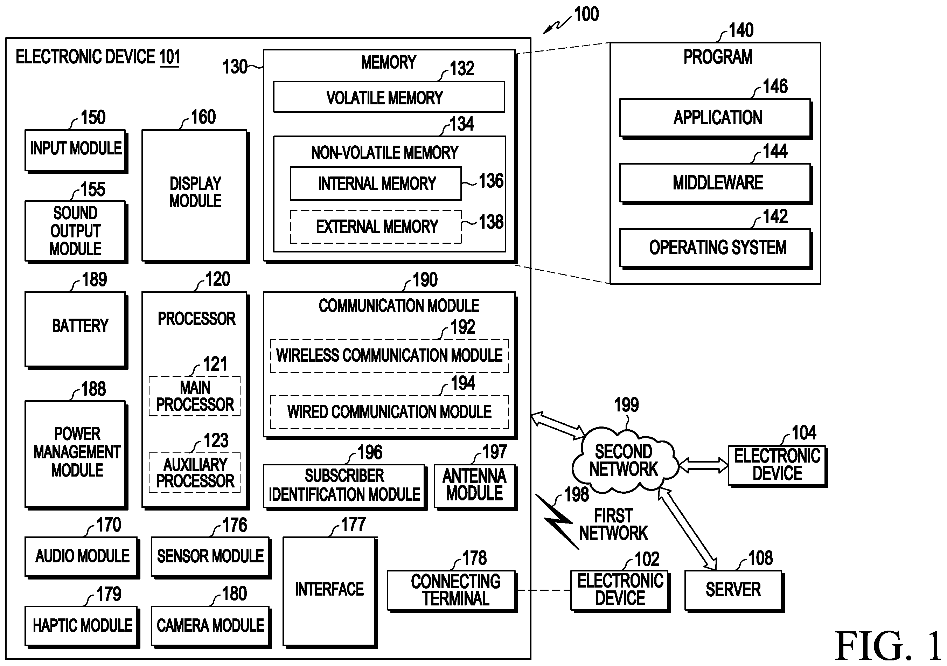

FIG. 1 is a block diagram illustrating an electronic device 101 in a network environment 100 according to an embodiment. Referring to FIG. 1, the electronic device 101 in the network environment 100 may communicate with at least one of an electronic device 102 via a first network 198 (e.g., a short-range wireless communication network), or an electronic device 104 or a server 108 via a second network 199 (e.g., a long-range wireless communication network). According to an embodiment, the electronic device 101 may communicate with the electronic device 104 via the server 108. According to an embodiment, the electronic device 101 may include a processor 120, memory 130, an input module 150, a sound output module 155, a display module 160, an audio module 170, a sensor module 176, an interface 177, a connecting terminal 178, a haptic module 179, a camera module 180, a power management module 188, a battery 189, a communication module 190, a subscriber identification module (SIM) 196, or an antenna module 197. In an embodiment, at least one (e.g., the connecting terminal 178) of the components may be omitted from the electronic device 101, or one or more other components may be added in the electronic device 101. According to an embodiment, some (e.g., the sensor module 176, the camera module 180, or the antenna module 197) of the components may be integrated into a single component (e.g., the display module 160).

The processor 120 may execute, for example, software (e.g., a program 140) to control at least one other component (e.g., a hardware or software component) of the electronic device 101 coupled with the processor 120, and may perform various data processing or computation. According to an embodiment, as at least part of the data processing or computation, the processor 120 may store a command or data received from another component (e.g., the sensor module 176 or the communication module 190) in volatile memory 132, process the command or the data stored in the volatile memory 132, and store resulting data in non-volatile memory 134. According to an embodiment, the processor 120 may include a main processor 121 (e.g., a central processing unit (CPU) or an application processor (AP)), or an auxiliary processor 123 (e.g., a graphics processing unit (GPU), a neural processing unit (NPU), an image signal processor (ISP), a sensor hub processor, or a communication processor (CP)) that is operable independently from, or in conjunction with, the main processor 121. For example, when the electronic device 101 includes the main processor 121 and the auxiliary processor 123, the auxiliary processor 123 may be configured to use lower power than the main processor 121 or to be specified for a designated function. The auxiliary processor 123 may be implemented as separate from, or as part of the main processor 121.

The auxiliary processor 123 may control at least some of functions or states related to at least one component (e.g., the display module 160, the sensor module 176, or the communication module 190) among the components of the electronic device 101, instead of the main processor 121 while the main processor 121 is in an inactive (e.g., sleep) state, or together with the main processor 121 while the main processor 121 is in an active state (e.g., executing an application). According to an embodiment, the auxiliary processor 123 (e.g., an image signal processor or a communication processor) may be implemented as part of another component (e.g., the camera module 180 or the communication module 190) functionally related to the auxiliary processor 123. According to an embodiment, the auxiliary processor 123 (e.g., the neural processing unit) may include a hardware structure specified for artificial intelligence model processing. The artificial intelligence model may be generated via machine learning. Such learning may be performed, e.g., by the electronic device 101 where the artificial intelligence is performed or via a separate server (e.g., the server 108). Learning algorithms may include, but are not limited to, e.g., supervised learning, unsupervised learning, semi-supervised learning, or reinforcement learning. The artificial intelligence model may include a plurality of artificial neural network layers. The artificial neural network may be a deep neural network (DNN), a convolutional neural network (CNN), a recurrent neural network (RNN), a restricted Boltzmann machine (RBM), a deep belief network (DBN), a bidirectional recurrent deep neural network (BRDNN), deep Q-network or a combination of two or more thereof but is not limited thereto. The artificial intelligence model may, additionally or alternatively, include a software structure other than the hardware structure.

The memory 130 may store various data used by at least one component (e.g., the processor 120 or the sensor module 176) of the electronic device 101. The various data may include, for example, software (e.g., the program 140) and input data or output data for a command related thereto. The memory 130 may include the volatile memory 132 or the non-volatile memory 134.

The program 140 may be stored in the memory 130 as software, and may include, for example, an operating system (OS) 142, middleware 144, or an application 146.

The input module 150 may receive a command or data to be used by other component (e.g., the processor 120) of the electronic device 101, from the outside (e.g., a user) of the electronic device 101. The input module 150 may include, for example, a microphone, a mouse, a keyboard, keys (e.g., buttons), or a digital pen (e.g., a stylus pen).

The sound output module 155 may output sound signals to the outside of the electronic device 101. The sound output module 155 may include, for example, a speaker or a receiver. The speaker may be used for general purposes, such as playing multimedia or playing record. The receiver may be used for receiving incoming calls. According to an embodiment, the receiver may be implemented as separate from, or as part of the speaker.

The display module 160 may visually provide information to the outside (e.g., a user) of the electronic device 101. The display 160 may include, for example, a display, a hologram device, or a projector and control circuitry to control a corresponding one of the display, hologram device, and projector. According to an embodiment, the display 160 may include a touch sensor configured to detect a touch, or a pressure sensor configured to measure the intensity of a force generated by the touch.

The audio module 170 may convert a sound into an electrical signal and vice versa. According to an embodiment, the audio module 170 may obtain the sound via the input module 150, or output the sound via the sound output module 155 or a headphone of an external electronic device (e.g., an electronic device 102) directly (e.g., wiredly) or wirelessly coupled with the electronic device 101.

The sensor module 176 may detect an operational state (e.g., power or temperature) of the electronic device 101 or an environmental state (e.g., a state of a user) external to the electronic device 101, and then generate an electrical signal or data value corresponding to the detected state. According to an embodiment, the sensor module 176 may include, for example, a gesture sensor, a gyro sensor, an atmospheric pressure sensor, a magnetic sensor, an accelerometer, a grip sensor, a proximity sensor, a color sensor, an infrared (IR) sensor, a biometric sensor, a temperature sensor, a humidity sensor, or an illuminance sensor.

The interface 177 may support one or more specified protocols to be used for the electronic device 101 to be coupled with the external electronic device (e.g., the electronic device 102) directly (e.g., wiredly) or wirelessly. According to an embodiment, the interface 177 may include, for example, a high definition multimedia interface (HDMI), a universal serial bus (USB) interface, a secure digital (SD) card interface, or an audio interface.

A connecting terminal 178 may include a connector via which the electronic device 101 may be physically connected with the external electronic device (e.g., the electronic device 102). According to an embodiment, the connecting terminal 178 may include, for example, an HDMI connector, a USB connector, an SD card connector, or an audio connector (e.g., a headphone connector).

The haptic module 179 may convert an electrical signal into a mechanical stimulus (e.g., a vibration or motion) or electrical stimulus which may be recognized by a user via his tactile sensation or kinesthetic sensation. According to an embodiment, the haptic module 179 may include, for example, a motor, a piezoelectric element, or an electric stimulator.

The camera module 180 may capture a still image or moving images. According to an embodiment, the camera module 180 may include one or more lenses, image sensors, image signal processors, or flashes.

The power management module 188 may manage power supplied to the electronic device 101. According to an embodiment, the power management module 188 may be implemented as at least part of, for example, a power management integrated circuit (PMIC).

The battery 189 may supply power to at least one component of the electronic device 101. According to an embodiment, the battery 189 may include, for example, a primary cell which is not rechargeable, a secondary cell which is rechargeable, or a fuel cell.

The communication module 190 may support establishing a direct (e.g., wired) communication channel or a wireless communication channel between the electronic device 101 and the external electronic device (e.g., the electronic device 102, the electronic device 104, or the server 108) and performing communication via the established communication channel. The communication module 190 may include one or more communication processors that are operable independently from the processor 120 (e.g., the application processor (AP)) and supports a direct (e.g., wired) communication or a wireless communication. According to an embodiment, the communication module 190 may include a wireless communication module 192 (e.g., a cellular communication module, a short-range wireless communication module, or a global navigation satellite system (GNSS) communication module) or a wired communication module 194 (e.g., a local area network (LAN) communication module or a power line communication (PLC) module). A corresponding one of these communication modules may communicate with the external electronic device 104 via a first network 198 (e.g., a short-range communication network, such as Bluetooth^{™}, wireless-fidelity (Wi-Fi) direct, or infrared data association (IrDA)) or a second network 199 (e.g., a long-range communication network, such as a legacy cellular network, a 5G network, a next-generation communication network, the Internet, or a computer network (e.g., local area network (LAN) or wide area network (WAN)). These various types of communication modules may be implemented as a single component (e.g., a single chip), or may be implemented as multi components (e.g., multi chips) separate from each other. The wireless communication module 192 may identify or authenticate the electronic device 101 in a communication network, such as the first network 198 or the second network 199, using subscriber information (e.g., international mobile subscriber identity (IMSI)) stored in the subscriber identification module 196.

The wireless communication module 192 may support a 5G network, after a 4G network, and next-generation communication technology, e.g., new radio (NR) access technology. The NR access technology may support enhanced mobile broadband (eMBB), massive machine type communications (mMTC), or ultra-reliable and low-latency communications (URLLC). The wireless communication module 192 may support a high-frequency band (e.g., the mmWave band) to achieve, e.g., a high data transmission rate. The wireless communication module 192 may support various technologies for securing performance on a high-frequency band, such as, e.g., beamforming, massive multiple-input and multiple-output (massive MIMO), full dimensional MIMO (FD-MIMO), array antenna, analog beam-forming, or large scale antenna. The wireless communication module 192 may support various requirements specified in the electronic device 101, an external electronic device (e.g., the electronic device 104), or a network system (e.g., the second network 199). According to an embodiment, the wireless communication module 192 may support a peak data rate (e.g., 20Gbps or more) for implementing eMBB, loss coverage (e.g., 164dB or less) for implementing mMTC, or U-plane latency (e.g., 0.5ms or less for each of downlink (DL) and uplink (UL), or a round trip of 1ms or less) for implementing URLLC.

The antenna module 197 may transmit or receive a signal or power to or from the outside (e.g., the external electronic device). According to an embodiment, the antenna module 197 may include one antenna including a radiator formed of a conductor or conductive pattern formed on a substrate (e.g., a printed circuit board (PCB)). According to an embodiment, the antenna module 197 may include a plurality of antennas (e.g., an antenna array). In this case, at least one antenna appropriate for a communication scheme used in a communication network, such as the first network 198 or the second network 199, may be selected from the plurality of antennas by, e.g., the communication module 190. The signal or the power may then be transmitted or received between the communication module 190 and the external electronic device via the selected at least one antenna. According to an embodiment, other parts (e.g., radio frequency integrated circuit (RFIC)) than the radiator may be further formed as part of the antenna module 197.

According to an embodiment, the antenna module 197 may form a mmWave antenna module. According to an embodiment, the mmWave antenna module may include a printed circuit board, a RFIC disposed on a first surface (e.g., the bottom surface) of the printed circuit board, or adjacent to the first surface and capable of supporting a designated high-frequency band (e.g., the mmWave band), and a plurality of antennas (e.g., array antennas) disposed on a second surface (e.g., the top or a side surface) of the printed circuit board, or adjacent to the second surface and capable of transmitting or receiving signals of the designated high-frequency band.

At least some of the above-described components may be coupled mutually and communicate signals (e.g., commands or data) therebetween via an inter-peripheral communication scheme (e.g., a bus, general purpose input and output (GPIO), serial peripheral interface (SPI), or mobile industry processor interface (MIPI)).

According to an embodiment, commands or data may be transmitted or received between the electronic device 101 and the external electronic device 104 via the server 108 coupled with the second network 199. The external electronic devices 102 or 104 each may be a device of the same or a different type from the electronic device 101. According to an embodiment, all or some of operations to be executed at the electronic device 101 may be executed at one or more of the external electronic devices 102, 104, or 108. For example, if the electronic device 101 should perform a function or a service automatically, or in response to a request from a user or another device, the electronic device 101, instead of, or in addition to, executing the function or the service, may request the one or more external electronic devices to perform at least part of the function or the service. The one or more external electronic devices receiving the request may perform the at least part of the function or the service requested, or an additional function or an additional service related to the request, and transfer an outcome of the performing to the electronic device 101. The electronic device 101 may provide the outcome, with or without further processing of the outcome, as at least part of a reply to the request. To that end, a cloud computing, distributed computing, mobile edge computing (MEC), or client-server computing technology may be used, for example. The electronic device 101 may provide ultra low-latency services using, e.g., distributed computing or mobile edge computing. In another embodiment, the external electronic device 104 may include an Internet-of-things (IoT) device. The server 108 may be an intelligent server using machine learning and/or a neural network. According to an embodiment, the external electronic device 104 or the server 108 may be included in the second network 199. The electronic device 101 may be applied to intelligent services (e.g., smart home, smart city, smart car, or health-care) based on 5G communication technology or loT-related technology.

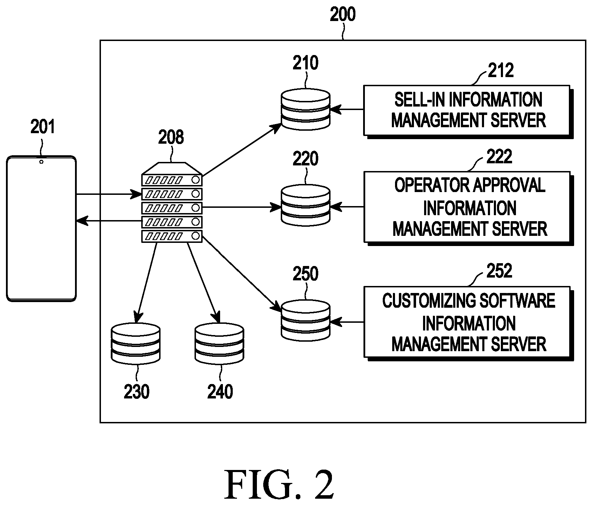

FIG. 2 is a view illustrating an example of a configuration of an electronic device and a software providing system 200 according to an embodiment.

Referring to FIG. 2, the electronic device 201 according to an embodiment may be equipped with basic software (e.g., firmware) when manufactured or shipped out. The electronic device 201 according to an embodiment may receive and install additional software from a software providing system 200 (or software providing device (or software providing software version)) according to the communication area (e.g., country or zone) of the electronic device or the operator (e.g., network operator or communication network operator) associated with the electronic device 201 when registered in the network to perform communication.

The additional software to be installed on the electronic device 201 according to an embodiment may be software reflecting different requirements for each communication area of the electronic device or the operator associated with the electronic device 201. For example, the software providing system 200 may obtain, store, manage, and/or provide software (e.g., customizing software or operator-oriented software) customized into the version of each network operator from the default software according to the request of each operator after issuing additional software (e.g., default software or open-type software) corresponding to the designated country. For example, after issuing first default software corresponding to a first communication area, the software providing system 200 may obtain, store, manage, and/or provide first customizing software obtained by customizing first software according to a request of a first network operator and obtain, store, manage, and/or provide second customizing software obtained by customizing the first software according to a request of a second network operator.

The software providing system 200 according to an embodiment may store, manage, and/or transmit each of the pieces of software (e.g., default software or customizing software) to be provided to the electronic device 201.

The software providing system 200 according to an embodiment may include a software providing device (or a software providing server or a server) 208, a sell-in information storage unit 210, a sell-in information management server 212, an operator approval information storage unit 220, an operator approval information management server 222, an area code storage unit 230, a default software information storage unit 240, a customizing software information storage unit 250, and/or a customizing software management server 252.

The sell-in information storage unit 210 according to an embodiment may store sell-in information. For example, the sell-in information may include area information in which the electronic device 201 is sold or network operator information. According to an embodiment, the area information may include a country code. For example, the country code may include a code representing one of a plurality of countries including Korea, Germany, France, or the United Kingdom. For example, the network operator information may include an operator code, and the operator code may include a code representing one of a plurality of network operators including Vodafone, SK telecom, LG telecom, or KT.

The sell-in information management server 212 according to an embodiment may generate sell-in information based on the sell-in of the electronic device 201, store it in the sell-in information storage unit 210, or manage (add, delete, or update) sell-in information stored in the sell-information storage unit 210.

The operator approval information storage unit 220 according to an embodiment may store the operator approval version. For example, the operator approval information storage unit 220 may store software version information approved for each operator. For example, the operator approval information storage unit 220 may store a first software version approved by the first operator and/or a second software version approved by the second operator.

The operator approval information management server 222 according to an embodiment may generate approved software version information for each operator based on whether each operator approves the software version, store the approved software version information for each operator in the operator approval information storage unit 220, or manage (add or delete or update) approved software version information for each operator stored in the operator approval information storage unit 220.

The area code storage unit 230 according to an embodiment may store a country code corresponding to the operator code. For example, if the operator code is a German operator, the country code corresponding to the operator code may be stored as the German code.

The default software information storage unit 240 according to an embodiment may store information about the default software (or open-type software). For example, the default software information storage unit 240 may store the default software itself for each piece of area information (or country code) and/or an address in which the default software for each piece of area information (or country code) is stored.

The customizing software information storage unit 250 according to an embodiment may store information about customizing software (or operator-oriented software). For example, the customizing software information storage unit 240 may store the customizing software itself for each operator code and/or an address in which the customizing software for each operator code is stored.

The customizing software management server 252 according to an embodiment may manage (add, delete, or update) the customizing software itself for each operator code and/or the address in which the customizing software for each operator code is stored through the customizing software information storage unit 250.

In the above description, according to an embodiment, the software providing system 200 includes the software providing device 208, the sell-in information storage unit 210, the sell-in information management server 212, the operator approval information storage unit 220, the operator approval information management server 222, the area code storage unit 230, the default software information storage unit 240, the customizing software information storage unit 250, and/or the customizing software management server 252, but the operation and information storage of each component of the software providing system 200 may be performed by at least one processor, at least one memory, and/or at least one communication module. For example, the software providing system 200 includes at least one processor, at least one memory, and at least one communication module, and may perform the operations of the software providing device 208, the sell-in information storage unit 210, the sell-in information management server 212, the operator approval information management server 222, the local code storage unit 230, the default software information storage unit 240, the customizing software information storage unit 250, and/or the customizing software management server 252 through the at least one processor, at least one memory, and at least one communication unit (or the communication module).

The sell-in information storage unit 210, the operator approval information storage unit 220, the area code storage unit 230, the default software information storage unit 240, and/or the customizing software information storage unit 250 according to an embodiment may be implemented as one or more cloud-based remote storage devices.

A device for providing customizing software according to an embodiment may comprise a communication module, memory, and a processor. The memory according to an embodiment may store instructions configured to, when executed, enable the processor to receive device information and software information about an electronic device through the communication module. The memory according to an embodiment may store instructions configured to, when executed, enable the processor to identify whether there is a designated operator associated with the electronic device based on the device information and the software information about the electronic device. The memory according to an embodiment may store instructions configured to, when executed, enable the processor to, in case that there is not the designated operator, provide first software information to the electronic device. The memory according to an embodiment may store instructions configured to, in case that there is the designated operator, based on whether to be approved by the designated operator, provide the first software information to the electronic device upon non-operator approval and provide the electronic device with second software information obtained by customizing the first software based on a request of the designated operator upon operator approval.

The device information about the electronic device according to an embodiment may include an international mobile equipment identity (IMEI).

The software information about the electronic device according to an embodiment may include version information about firmware equipped when the electronic device is manufactured or shipped out.

The instructions according to an embodiment may be further configured to identify a country code or an operator code based on the device information and the software information about the electronic device, in case that the country code is identified, identify that there is not the designated operator associated with the electronic device and, in case that the operator code is identified, identify that there is the designated operator corresponding to the operator code.

The instructions according to an embodiment may be further configured to, upon the operator approval, identify whether a software version of the electronic device is identical to or a higher version than a software version approved by the operator, when the software version of the electronic device is not identical or the higher version than the software version approved by the operator, provide the first software information to the electronic device and, when the software version of the electronic device is identical to or the higher version than the software version approved by the operator, provide the second software information to the electronic device.

An electronic device according to an embodiment may comprise a communication module, memory, and a processor. The memory according to an embodiment may store instructions configured to, when executed, enable the processor to transmit device information and software information about an electronic device to a software providing device through the communication module. The memory according to an embodiment may store instructions configured to, when executed, enable the processor to receive software information corresponding to the device information and the software information about the electronic device from the software providing device. The memory according to an embodiment may store instructions configured to, when executed, enable the processor to identify whether the received software information is first software information or second software information customized for the first software based on a request of a designated operator. The memory according to an embodiment may store instructions configured to, when executed, enable the processor to install first software based on the first software information or install second software based on the second software information.

The device information about the electronic device according to an embodiment may include an international mobile equipment identity (IMEI).

The software information about the electronic device according to an embodiment may include version information about firmware equipped when the electronic device is manufactured or shipped out.

The first software information according to an embodiment may include a country code. The instructions of the electronic device according to an embodiment may be further configured to request and download first software corresponding to the country code from the software providing device.

The second software information according to an embodiment may include an operator code. The instructions of the electronic device according to an embodiment may be further configured to download second software corresponding to the operator code from the software providing device.

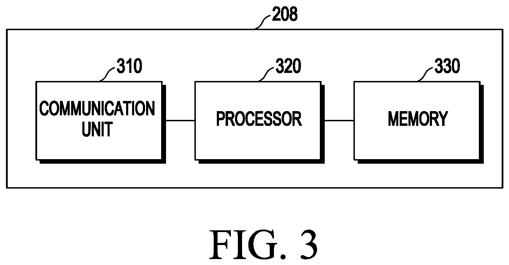

FIG. 3 is a block diagram illustrating a software providing device 208 according to an embodiment.

Referring to FIG. 3, the software providing device 208 according to an embodiment may include a communication module 310, a processor 320, and/or memory 330. The software providing device 208 is not limited thereto and may further include various components and may omit some of the above-described components. The software providing device 208 according to an embodiment may further include the whole or part of the software providing system 200 shown in FIG. 2.

The communication module 310 according to an embodiment may communicate with the electronic device 201 based on the control of the processor 320. When the sell-in information storage unit 210, the operator approval information storage unit 220, the area code storage unit 230, the default software information storage unit 240, and/or the customizing software information storage unit 250 is implemented as a remote storage device, the communication module 310 according to an embodiment may communicate with the sell-information storage unit 210, the operator approval information storage unit 220, the area code storage unit 230, the default software information storage unit 240, and/or the customizing software information storage unit 250 based on the control of the processor 320. For example, the communication module 310 may include a wireless communication module (e.g., a cellular communication module, a short-range wireless communication module, or a global navigation satellite system (GNSS) communication module) or a wired communication module (e.g., a local area network (LAN) communication module, or a power line communication module). These various types of communication modules may be implemented as a single component (e.g., a single chip), or may be implemented as multi components (e.g., multi chips) separate from each other.

The processor 320 according to an embodiment may receive device information and software information about the electronic device 201 from the electronic device 201 through the communication module 310. The processor 320 according to an embodiment may receive the device information and software information about the electronic device 201 transmitted from the electronic device 201 when the electronic device 201 is registered in the network to be able to perform communication. For example, the device information about the electronic device 201 may include an international mobile equipment identity (IMEI) (or terminal identification number). For example, the software information about the electronic device 201 may include version information about basic software (e.g., firmware) mounted when the electronic device 201 is manufactured or shipped.

The processor 320 according to an embodiment may identify sell-in information based on the device information and software information about the electronic device 201. For example, the processor 320 may identify area (or country) information or operator information corresponding to the device information and software information about the electronic device 201 using the sell-in information stored in the sell-in information storage unit 210.

The processor 320 according to an embodiment may identify whether there is a designated operator based on area (or country) information or operator information corresponding to the device information and software information about the electronic device 201. For example, the processor 320 may identify whether the electronic device 201 is sold to be available in a specific country without designation of an operation (open-type) or is sold with an operation designated (operator-oriented) based on the area (or country) information or operator information corresponding to the device information and software information about the electronic device 201. For example, if the country code corresponding to the device information and software information about the electronic device 201 is identified, the processor 320 may identify that the electronic device 201 is sold (open-type) to be available in a specific country corresponding to the country code without designation of an operator. For example, if the operator code corresponding to the device information and software information about the electronic device 201 is identified, the processor 320 may identify that the electronic device 201 is sold (operator-oriented) to be available by the operator of the identified operator code.

The processor 320 according to an embodiment may identify the first software information (e.g., default software information or open-type software information) when there is no designated operator associated with the electronic device 201. For example, default software information may be software not customized by the network operator, as software to be additionally installed corresponding to the country where communication is to be performed in addition to software pre-installed on the electronic device 201. The processor 320 according to an embodiment may transmit the first software information to the electronic device 201. For example, the first software information may include a country code for downloading the first software or may include the first software itself. When the first software information includes the country code, the electronic device 201 according to an embodiment may request the first software corresponding to the country code from the software providing device 208 and download the first software from the software providing device 208.

The processor 320 according to an embodiment may identify whether to approve by the operator when there is a designated operator associated with the electronic device 201. For example, the processor 320 may identify approved software version information about the designated operator for the software version of the electronic device 201 using the information stored in the operator approval information storage unit 220.

If not approved by the operator, the processor 320 according to an embodiment may identify the first software information (e.g., default software information or open-type software information) and transmit it to the electronic device 201. If approved by the operator, the processor 320 according to an embodiment may identify the second software information (e.g., customizing software information) obtained by customizing the first software information, corresponding to the designated operator. For example, the processor 320 may identify the customizing software itself corresponding to the designated operator code and/or the designated operator code for downloading the designated operator code using the information stored in the customizing software information storage unit 250. The processor 320 according to an embodiment may transmit the second software information to the electronic device 201. For example, the second software information may include an operator code for downloading the second software or may include the second software itself. When the second software information includes the operator code, the electronic device 201 according to an embodiment may request the second software corresponding to the operator code from the software providing device 208 and download the second software from the software providing device 208.

The processor 320 according to an embodiment may identify whether the software version of the electronic device 201 is identical to or a higher version than the software version approved by the operator in the state approved by the operator. The processor 320 according to an embodiment may identify and transmit the first software information (e.g., default software information or open-type software information) to the electronic device 201 when the software version of the electronic device 201 is not identical to or a higher version than the software version approved by the operator in the state approved by the operator. If the software version of the electronic device 201 in the state approved by the operator is identical to or a higher version than the software version approved by the operator, the processor 320 according to an embodiment may identify the second software information (e.g., customizing software information) and transmit it to the electronic device 201.

According to an embodiment, the memory 330 may store various data generated during execution of the program 140 , as well as a program (e.g., the program 140 of FIG. 1) used for functional operation. The memory 250 may include a program area 140 and a data area (not shown). The program area 140 may store relevant program information for driving the electronic device 201, such as an operating system (OS) (e.g., the OS 142 of FIG. 1) for booting the electronic device 201. For example, the memory 250 may include at least one storage medium of a flash memory, a hard disk, a multimedia card, a micro-type memory (e.g., a secure digital (SD) or an extreme digital (xD) memory), a random access memory (RAM), or a read only memory (ROM).

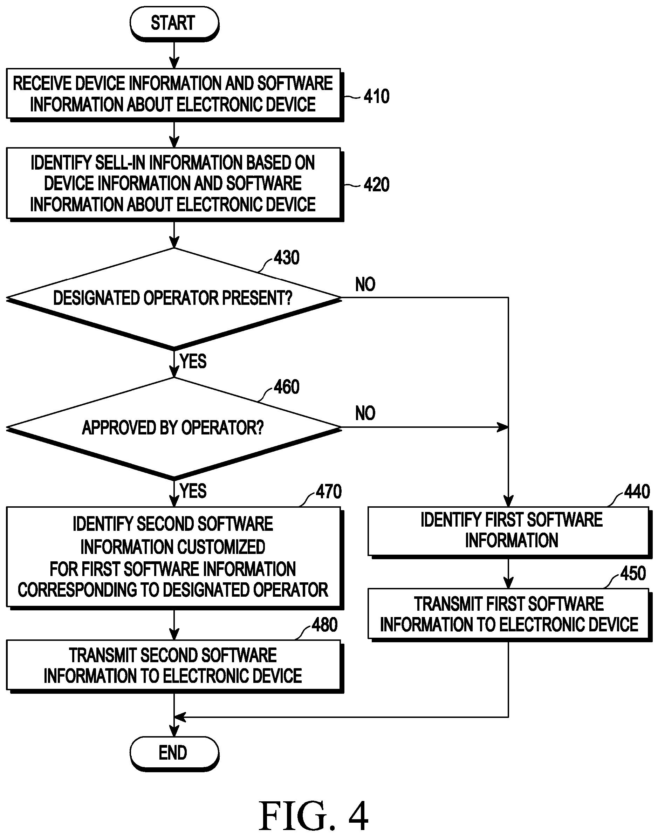

FIG. 4 is a flowchart illustrating an example of a software providing operation according to an embodiment.

Referring to FIG. 4, the processor (e.g., the processor 320 of FIG. 2) of the software providing device (e.g., the server 108 of FIG. 1 or the software providing device 208 of FIG. 2) according to an embodiment may perform at least one of operations 410 to 480.

In operation 410, the processor 320 according to an embodiment may receive device information and software information about the electronic device 201 from the electronic device 201 through the communication module 310. The processor 320 according to an embodiment may receive the device information and software information about the electronic device 201 transmitted from the electronic device 201 when the electronic device 201 is registered in the network to be able to perform communication. For example, the device information about the electronic device 201 may include an international mobile equipment identity (IMEI) (or terminal identification number). For example, the software information about the electronic device 201 may include version information about basic software (e.g., firmware) mounted when the electronic device 201 is manufactured or shipped.

In operation 420, the processor 320 according to an embodiment may identify sell-in information based on the device information and software information about the electronic device 201. For example, the processor 320 may identify area (or country) information or operator information corresponding to the device information and software information about the electronic device 201 using the sell-in information stored in the sell-in information storage unit 210.

In operation 430, the processor 320 according to an embodiment may identify whether there is a designated operator based on area (or country) information or operator information corresponding to the device information and software information about the electronic device 201. For example, the processor 320 may identify whether the electronic device 201 is sold to be available in a specific country without designation of an operation (whether it is open-type) or is sold with an operation designated (whether it is operator-oriented) based on the area (or country) information or operator information corresponding to the device information and software information about the electronic device 201. For example, if the country code corresponding to the device information and software information about the electronic device 201 is identified, the processor 320 may identify that the electronic device 201 is sold (open-type) to be available in a specific country corresponding to the country code without designation of an operator. For example, if the operator code corresponding to the device information and software information about the electronic device 201 is identified, the processor 320 may identify that the electronic device 201 is sold (operator-oriented) to be available by the operator of the identified operator code.

In operation 440, the processor 320 according to an embodiment may identify the first software information (e.g., default software information or open-type software information) when there is no designated operator associated with the electronic device 201. For example, default software information may be software not customized by the network operator, as software to be additionally installed corresponding to the country where communication is to be performed in addition to software pre-installed on the electronic device 201.

In operation 450, the processor 320 according to an embodiment may transmit the first software information to the electronic device 201. For example, the first software information may include a country code for downloading the first software or may include the first software itself. When the first software information includes the country code, the electronic device 201 according to an embodiment may request the first software corresponding to the country code from the software providing device 208 and download the first software from the software providing device 208.

In operation 460, the processor 320 according to an embodiment may identify whether to approve by the operator when there is a designated operator associated with the electronic device 201. For example, the processor 320 may identify approved software version information about the designated operator for the software version of the electronic device 201 using the information stored in the operator approval information storage unit 220. If not approved by the operator, the processor 320 according to an embodiment may perform operations 440 and 450 to transmit the first software information (e.g., default software information or open-type software information) to the electronic device 201.

In operation 470, if approved by the operator, the processor 320 according to an embodiment may identify the second software information (e.g., customizing software information) obtained by customizing the first software information, corresponding to the designated operator.

In operation 480, the processor 320 according to an embodiment may transmit the identified second software information to the electronic device 201. For example, the second software information may include an operator code for downloading the second software or may include the second software itself. When the second software information includes the operator code, the electronic device 201 according to an embodiment may request the second software corresponding to the operator code from the software providing device 208 and download the second software from the software providing device 208.

A customizing software providing method according to an embodiment may include receiving device information and software information about an electronic device from the electronic device through a communication module. The method according to an embodiment may include identifying whether there is a designated operator associated with the electronic device based on the device information and the software information about the electronic device. The method according to an embodiment may include, in case that there is not the designated operator, providing first software information to the electronic device. The method according to an embodiment may include, in case that there is the designated operator, based on whether to be approved by the designated operator, providing the first software information to the electronic device upon non-operator approval and providing the electronic device with second software information obtained by customizing the first software based on a request of the designated operator upon operator approval.

In the method according to an embodiment, the device information about the electronic device may include an international mobile equipment identity (IMEI).

In the method according to an embodiment, the software information about the electronic device may include version information about firmware equipped when the electronic device is manufactured or shipped out.

The method according to an embodiment may include identifying a country code or an operator code based on the device information and the software information about the electronic device. The method according to an embodiment may include, in case that the country code is identified, identifying that there is not the designated operator associated with the electronic device. The method according to an embodiment may include, in case that the operator code is identified, identifying that there is the designated operator corresponding to the operator code.

The method according to an embodiment may include, upon the operator approval, identifying whether a software version of the electronic device is identical to or a higher version than a software version approved by the operator. The method according to an embodiment may include, when the software version of the electronic device is not identical or the higher version than the software version approved by the operator, providing the first software information to the electronic device. The method according to an embodiment may include, when the software version of the electronic device is identical to or the higher version than the software version approved by the operator, providing the second software information to the electronic device.

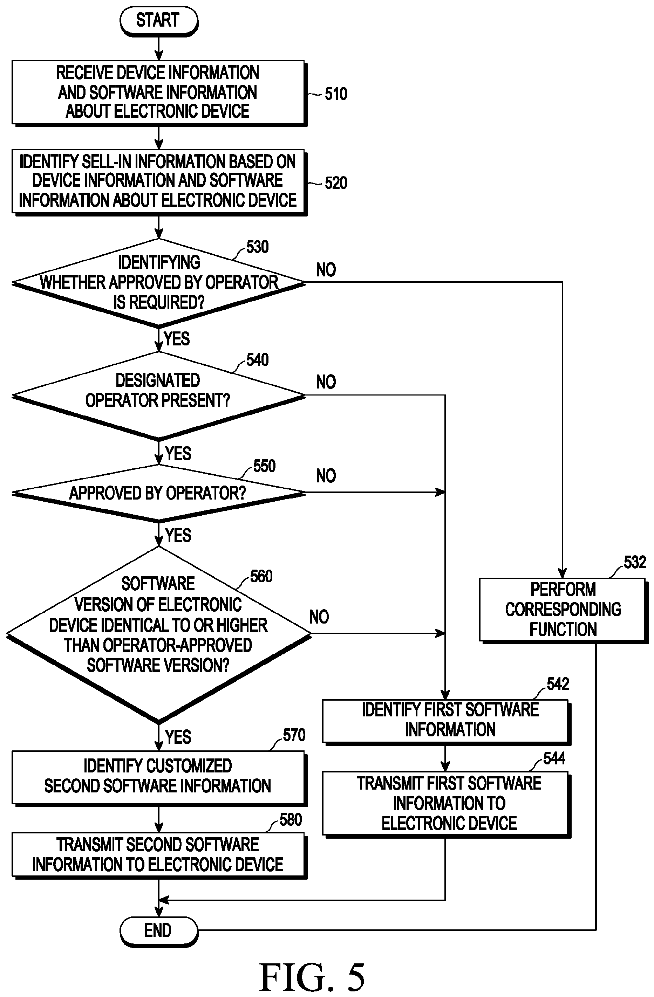

FIG. 5 is a flowchart illustrating an example of a software providing operation based on a software version of an electronic device according to an embodiment.

Referring to FIG. 5, the processor (e.g., the processor 320 of FIG. 2) of the software providing device (e.g., the server 108 of FIG. 1 or the software providing device 208 of FIG. 2) according to an embodiment may perform at least one of operations 510 to 580.

In operation 510, the processor 320 according to an embodiment may receive device information and software information about the electronic device 201 from the electronic device 201 through the communication module 310. The processor 320 according to an embodiment may receive the device information and software information about the electronic device 201 transmitted from the electronic device 201 when the electronic device 201 is registered in the network to be able to perform communication. For example, the device information about the electronic device 201 may include an international mobile equipment identity (IMEI) (or terminal identification number). For example, the software information about the electronic device 201 may include version information about basic software (e.g., firmware) mounted when the electronic device 201 is manufactured or shipped.

In operation 520, the processor 320 according to an embodiment may identify sell-in information based on the device information and software information about the electronic device 201. For example, the processor 320 may identify area (or country) information or operator information corresponding to the device information and software information about the electronic device 201 using the sell-in information stored in the sell-in information storage unit 210.

In operation 530, the processor 320 according to an embodiment may identify whether it is required to identify whether to be approved by the operator. For example, the processor 320 may identify operator's approval based on the device information and software information about the electronic device 201 and identify whether it is required to provide software (e.g., a state in which it is required to apply TSS 2.1 process). For example, the processor 320 may identify whether it is in a state configured to use a process in which non-customized first software information or customized second software is provided depending on whether it is approved by the operator based on the device information and software information about the electronic device 201. The processor 320 according to an embodiment may identify whether it is approved by the operator and, if it is not in the state in which providing software is required, perform the corresponding function in operation 532. The software providing operation may be performed. For example, the processor 320 may identify whether it is approved by the operator and, if it is not in the state in which providing software is required, provide software information regardless of whether it is approved by the operator. The processor 320 according to an embodiment may identify whether it is approved by the operator and, when it is in a state in which providing software is required, perform operation 540.

In operation 540, the processor 320 according to an embodiment may identify whether there is a designated operator based on area (or country) information or operator information corresponding to the device information and software information about the electronic device 201. For example, the processor 320 may identify whether the electronic device 201 is sold to be available in a specific country without designation of an operation (whether it is open-type) or is sold with an operation designated (whether it is operator-oriented) based on the area (or country) information or operator information corresponding to the device information and software information about the electronic device 201. For example, if the country code corresponding to the device information and software information about the electronic device 201 is identified, the processor 320 may identify that it is sold (open-type) to be available in a specific country corresponding to the country code without designation of an operator. For example, if the operator code corresponding to the device information and software information about the electronic device 201 is identified, the processor 320 may identify that it is sold (operator-oriented) to be available by the operator of the identified operator code.

In operation 542, the processor 320 according to an embodiment may identify the first software information (e.g., default software information or open-type software information) when there is no designated operator associated with the electronic device 201. For example, default software information may be software not customized by the network operator, as software to be additionally installed corresponding to the country where communication is to be performed in addition to software pre-installed on the electronic device 201.

In operation 544, the processor 320 according to an embodiment may transmit the first software information to the electronic device 201. For example, the first software information may include a country code for downloading the first software or may include the first software itself. When the first software information includes the country code, the electronic device 201 according to an embodiment may request the first software corresponding to the country code from the software providing device 208 and download the first software from the software providing device 208.

In operation 550, the processor 320 according to an embodiment may identify whether to approve by the operator when there is a designated operator associated with the electronic device 201. For example, the processor 320 may identify approved software version information about the designated operator for the software version of the electronic device 201 using the information stored in the operator approval information storage unit 220. If not approved by the operator, the processor 320 according to an embodiment may perform operations 542 and 544 to transmit the first software information (e.g., default software information or open-type software information) to the electronic device 201. The processor 320 according to an embodiment may perform operation 560 if it is in an operator approved state.

In operation 560, the processor 320 according to an embodiment may identify whether the software version of the electronic device 201 is identical to or a higher version than the software version approved by the operator in the state approved by the operator. The processor 320 according to an embodiment may perform operations 542 and 544 to transmit the first software information (e.g., default software information or open-type software information) to the electronic device 201 when the software version of the electronic device 201 is not identical to or a higher version than the software version approved by the operator in the state approved by the operator. The processor 320 according to an embodiment may perform operation 570 if the software version of the electronic device 201 is identical to or a higher version than the software version approved by the operator in the state approved by the operator.

In operation 570, if the software version of the electronic device 201 in the state approved by the operator is identical to or a higher version than the software version approved by the operator, the processor 320 according to an embodiment may identify the second software information (e.g., customizing software information).

In operation 580, the processor 320 according to an embodiment may transmit the second software information (e.g., customizing software information) to the electronic device 201. For example, the second software information may include an operator code for downloading the second software or may include the second software itself. When the second software information includes the operator code, the electronic device 201 according to an embodiment may request the second software corresponding to the operator code from the software providing device 208 and download the second software from the software providing device 208.

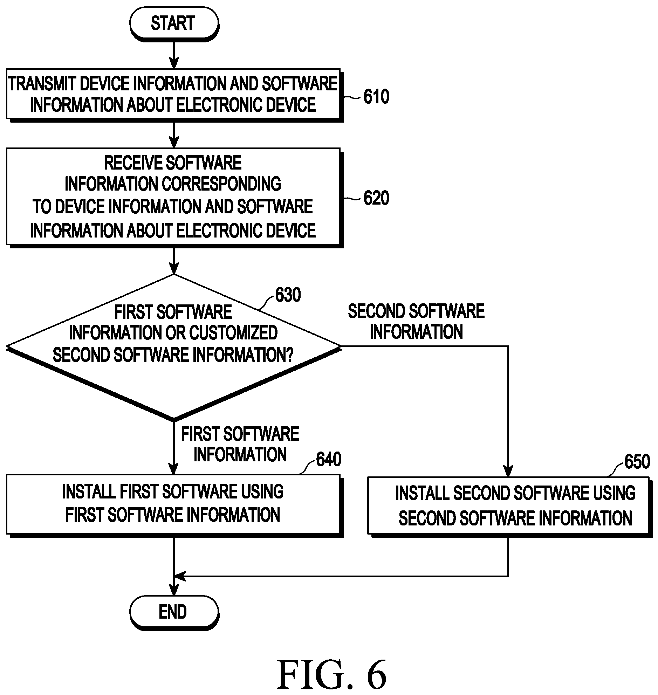

FIG. 6 is a flowchart illustrating an example of an operation of receiving and installing software from an electronic device according to an embodiment.

Referring to FIG. 6, a processor (e.g., the processor 120 of FIG. 1) of an electronic device (e.g., the electronic device 101 of FIG. 1 or the electronic device 201 of FIG. 2) according to an embodiment may perform at least one of operations 610 to 650.

In operation 610, the processor 120 according to an embodiment may transmit device information and software information about the electronic device 201 to the software providing device 208. The processor 120 according to an embodiment may transmit the device information and software information about the electronic device 201 to the software providing device 208 when registered in the network to be able to perform communication. For example, the device information about the electronic device 201 may include an international mobile equipment identity (IMEI) (or terminal identification number). For example, the software information about the electronic device 201 may include version information about basic software (e.g., firmware) mounted when the electronic device 201 is manufactured or shipped.

In operation 620, the processor 120 according to an embodiment may receive software information corresponding to the device information and software information about the electronic device 201 from the software providing device 208. For example, the processor 120 may receive software information to be additionally installed in addition to the basic software (e.g., firmware) pre-equipped from the software providing device 208 based on the device information and software information about the electronic device 201. For example, the software information to be additionally installed may include first software (e.g., default software or open-type software) information corresponding to a designated country or second software (e.g., customizing software or operator-oriented software) information customized into the version of each network operator from the default software according to a request of each operator.

In operation 630, the processor 120 according to an embodiment may identify whether the received software information is the first software information or customized second software information. For example, the processor 120 may identify whether the received software information is the first software information or the customized second software information using customizing identification information included in the received software information.

In operation 640, the processor 120 according to an embodiment may install the first software using the first software information. For example, the first software information may include a country code for downloading the first software or may include the first software itself. When the first software information includes the country code, the processor 120 according to an embodiment may request the first software corresponding to the country code from the software providing device 208 and download the first software from the software providing device 208.

In operation 650, the processor 120 according to an embodiment may install the second software using the second software information. For example, the second software information may include an operator code for downloading the second software or may include the second software itself. When the second software information includes the operator code, the processor 120 according to an embodiment may request the second software corresponding to the operator code from the software providing device 208 and download the second software from the software providing device 208.

A method for receiving software from an electronic device according to an embodiment may include transmitting device information and software information about the electronic device to a software providing device. In the electronic device according to an embodiment, the method may include receiving software information corresponding to the device information and the software information about the electronic device from the software providing device. In the electronic device according to an embodiment, the method may include identifying whether the received software information is first software information or second software information customized for the first software based on a request of a designated operator. In the electronic device according to an embodiment, the method may include installing the first software based on the first software information or installing second software based on the second software information.

In the method of the electronic device according to an embodiment, the device information about the electronic device may include an international mobile equipment identity (IMEI).

In the method of the electronic device according to an embodiment, the software information about the electronic device may include version information about firmware equipped when the electronic device is manufactured or shipped out.

In the method of the electronic device according to an embodiment, the first software information may include a country code. The method of the electronic device may include requesting and downloading first software corresponding to the country code from the software providing device. In the method of the electronic device according to an embodiment, the second software information may include an operator code. The method of the electronic device may include downloading second software corresponding to the operator code from the software providing device.

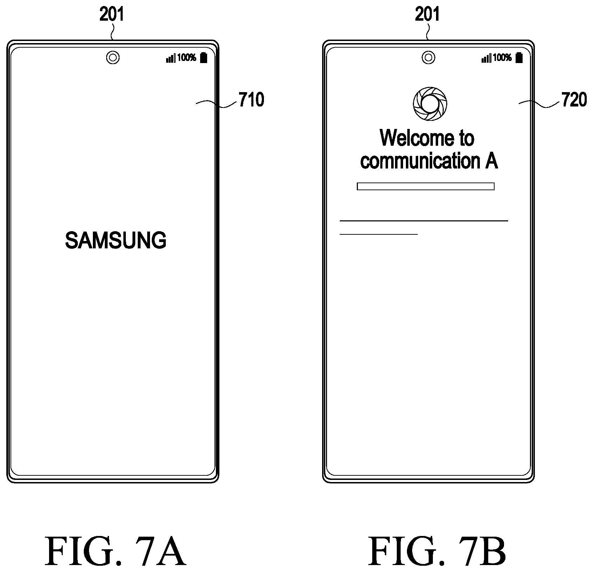

FIG. 7A is a view illustrating a first screen displayed when default software is installed on an electronic device according to an embodiment. FIG. 7B is a view illustrating a second screen displayed when customizing software is installed on an electronic device according to an embodiment.

Referring to FIG. 7A, the electronic device 201 according to an embodiment may display a first screen 710 associated with default software when installing the default software. For example, the first screen 710 may be a non-customized screen that does not reflect the requirements from the operator.

Referring to FIG. 7B, the electronic device 201 according to an embodiment may display a second screen 710 associated with customizing software when installing the customizing software. For example, the second screen 710 may be a screen customized to reflect the requirements of communication operator A.

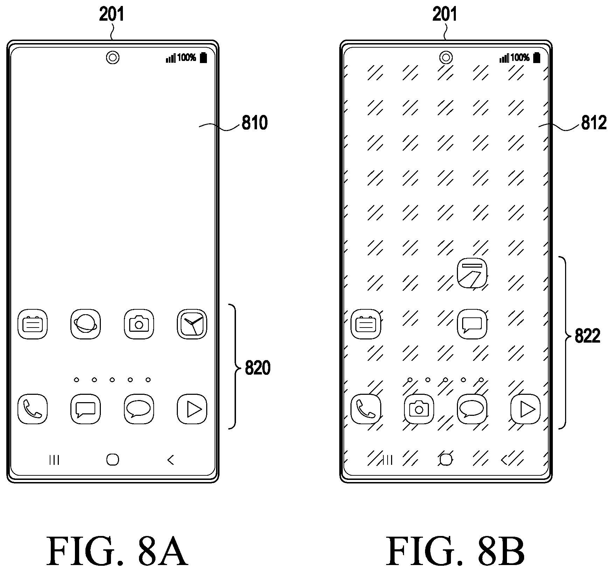

FIG. 8A is a view illustrating a first home screen background and a first app arrangement displayed when default software is installed on an electronic device according to an embodiment. FIG. 8B is a view illustrating a second home screen background and a second app arrangement displayed when customizing software is installed on an electronic device according to an embodiment.

Referring to FIG. 8A, the electronic device 201 according to an embodiment may configure a first home screen background 810 and a first app arrangement 820 according to a first home screen background and a first app arrangement associated with default software when installing the default software. For example, the first home screen background 810 and the first app arrangement 820 may be a home screen background and an app arrangement not customized, without reflecting the requirements of the operator.

Referring to FIG. 8B, the electronic device 201 according to an embodiment may configure a second home screen background 812 and a second app arrangement 822 according to a second home screen background and a second app arrangement associated with customizing software when installing the customizing software. For example, the second home screen background 812 and the second app arrangement 822 may be a home screen background and an app arrangement customized to reflect the requirements of the operator.

The electronic device according to an embodiment of the disclosure may be one of various types of electronic devices. The electronic devices may include, for example, a portable communication device (e.g., a smartphone), a computer device, a portable multimedia device, a portable medical device, a camera, a wearable device, or a home appliance. According to an embodiment of the disclosure, the electronic devices are not limited to those described above.

It should be appreciated that various embodiments of the present disclosure and the terms used therein are not intended to limit the technological features set forth herein to particular embodiments and include various changes, equivalents, or replacements for a corresponding embodiment. With regard to the description of the drawings, similar reference numerals may be used to refer to similar or related elements. It is to be understood that a singular form of a noun corresponding to an item may include one or more of the things, unless the relevant context clearly indicates otherwise. As used herein, each of such phrases as "A or B," "at least one of A and B," "at least one of A or B," "A, B, or C," "at least one of A, B, and C," and "at least one of A, B, or C," may include all possible combinations of the items enumerated together in a corresponding one of the phrases. As used herein, such terms as "1st" and "2nd," or "first" and "second" may be used to simply distinguish a corresponding component from another, and does not limit the components in other aspect (e.g., importance or order). It is to be understood that if an element (e.g., a first element) is referred to, with or without the term "operatively" or "communicatively", as "coupled with," "coupled to," "connected with," or "connected to" another element (e.g., a second element), it means that the element may be coupled with the other element directly (e.g., wiredly), wirelessly, or via a third element.

As used herein, the term "module" may include a unit implemented in hardware, software, or firmware, and may interchangeably be used with other terms, for example, "logic," "logic block," "part," or "circuitry". A module may be a single integral component, or a minimum unit or part thereof, adapted to perform one or more functions. For example, according to an embodiment, the module may be implemented in a form of an application-specific integrated circuit (ASIC).

An embodiment of the disclosure may be implemented as software (e.g., the program 140) including one or more instructions that are stored in a storage medium (e.g., internal memory 136 or external memory 138) that is readable by a machine (e.g., the electronic device 101 or the electronic device 301). For example, a processor (e.g., the processor 520) of the machine (e.g., the electronic device 301) may invoke at least one of the one or more instructions stored in the storage medium, and execute it, with or without using one or more other components under the control of the processor. This allows the machine to be operated to perform at least one function according to the at least one instruction invoked. The one or more instructions may include a code generated by a complier or a code executable by an interpreter. The storage medium readable by the machine may be provided in the form of a non-transitory storage medium. Wherein, the term "non-transitory" simply means that the storage medium is a tangible device, and does not include a signal (e.g., an electromagnetic wave), but this term does not differentiate between where data is semi-permanently stored in the storage medium and where the data is temporarily stored in the storage medium.

According to an embodiment, a method according to an embodiment of the disclosure may be included and provided in a computer program product. The computer program products may be traded as commodities between sellers and buyers. The computer program product may be distributed in the form of a machine-readable storage medium (e.g., compact disc read only memory (CD-ROM)), or be distributed (e.g., downloaded or uploaded) online via an application store (e.g., Play Store^{™}), or between two user devices (e.g., smartphones) directly. If distributed online, at least part of the computer program product may be temporarily generated or at least temporarily stored in the machine-readable storage medium, such as memory of the manufacturer's server, a server of the application store, or a relay server.

According to an embodiment of the disclosure, in a non-volatile storage medium storing instructions, the instructions are configured to, when executed by an electronic device, enable the electronic device to perform at least one operation, and the at least one operation may comprise receiving device information and software information about an electronic device through the communication module, identifying whether there is a designated operator associated with the electronic device based on the device information and the software information about the electronic device, in case that there is not the designated operator, providing first software information to the electronic device, in case that there is the designated operator, based on whether to be approved by the designated operator, providing the first software information to the electronic device upon non-operator approval and providing the electronic device with second software information obtained by customizing the first software based on a request of the designated operator upon operator approval.

According to an embodiment, each component (e.g., a module or a program) of the above-described components may include a single entity or multiple entities. Some of the plurality of entities may be separately disposed in different components. According to an embodiment, one or more of the above-described components may be omitted, or one or more other components may be added. Alternatively or additionally, a plurality of components (e.g., modules or programs) may be integrated into a single component. In such a case, according to various embodiments, the integrated component may still perform one or more functions of each of the plurality of components in the same or similar manner as they are performed by a corresponding one of the plurality of components before the integration. According to various embodiments, operations performed by the module, the program, or another component may be carried out sequentially, in parallel, repeatedly, or heuristically, or one or more of the operations may be executed in a different order or omitted, or one or more other operations may be added.

## Claims

1. A customizing software providing device, comprising:
a communication module (communication module 310 of FIG. 3);
memory (memory 330 of FIG. 3); and
a processor (processor 320 of FIG. 3), wherein the memory stores instructions configured to, when executed, enable the processor to:
receive device information and software information about an electronic device through the communication module,
identify whether there is a designated operator associated with the electronic device based on the device information and the software information about the electronic device,
in case that there is not the designated operator, provide first software information to the electronic device, and
in case that there is the designated operator, based on whether to be approved by the designated operator, provide the first software information to the electronic device upon non-operator approval and provide the electronic device with second software information obtained by customizing the first software based on a request of the designated operator upon operator approval.

2. The customizing software providing device of claim 1,
wherein the device information about the electronic device includes an international mobile equipment identity (IMEI).

3. The customizing software providing device of claim 1 or 2,
wherein the software information about the electronic device includes version information about firmware equipped when the electronic device is manufactured or shipped out.

4. The customizing software providing device of any one of claims 1 to 3,
wherein the instructions are further configured to identify a country code or an operator code based on the device information and the software information about the electronic device, in case that the country code is identified, identify that there is not the designated operator associated with the electronic device and, in case that the operator code is identified, identify that there is the designated operator corresponding to the operator code.

5. The customizing software providing device of any one of claims 1 to 4,
wherein the instructions are configured to, upon the operator approval, identify whether a software version of the electronic device is identical to or a higher version than a software version approved by the operator, when the software version of the electronic device is not identical or the higher version than the software version approved by the operator, provide the first software information to the electronic device and, when the software version of the electronic device is identical to or the higher version than the software version approved by the operator, provide the second software information to the electronic device.

6. An electronic device, comprising:
a communication module (communication module 190 of FIG. 1);
memory (memory 130 of FIG. 1); and
a processor (processor 120 of FIG. 1), wherein the memory stores instructions configured to, when executed, enable the processor to:
transmit device information and software information about the electronic device to a software providing device through the communication module, receive software information corresponding to the device information and the software information about the electronic device from the software providing device, identify whether the received software information is first software information or second software information customized for the first software based on a request of a designated operator, install the first software based on the first software information or install second software based on the second software information.

7. The electronic device of claim 6, wherein the device information about the electronic device includes an international mobile equipment identity (IMEI).

8. The electronic device of claim 6 or 7, wherein the software information about the electronic device includes version information about firmware equipped when the electronic device is manufactured or shipped out.

9. The electronic device of any one of claims 6 to 8, wherein the first software information includes a country code, and wherein the instructions are further configured to request and download first software corresponding to the country code from the software providing device.

10. The electronic device of any one of claims 6 to 8, wherein the second software information includes an operator code, and wherein the instructions are further configured to download second software corresponding to the operator code from the software providing device.

11. A customizing software providing method, comprising:
receiving device information and software information about an electronic device from the electronic device through a communication module;
identifying whether there is a designated operator associated with the electronic device based on the device information and the software information about the electronic device;
in case that there is not the designated operator, providing first software information to the electronic device; and
in case that there is the designated operator, based on whether to be approved by the designated operator, providing the first software information to the electronic device upon non-operator approval and providing the electronic device with second software information obtained by customizing the first software based on a request of the designated operator upon operator approval,.

12. The customizing software providing method of claim 11, further comprising:
identifying a country code or an operator code based on the device information and the software information about the electronic device;
in case that the country code is identified, identifying that there is not the designated operator associated with the electronic device; and
in case that the operator code is identified, identifying that there is the designated operator corresponding to the operator code, wherein the device information about the electronic device includes an international mobile equipment identity (IMEI), and the software information about the electronic device includes version information about firmware equipped when the electronic device is manufactured or shipped out.

13. The customizing software providing method of claim 11 or 12, further comprising:
upon the operator approval, identifying whether a software version of the electronic device is identical to or a higher version than a software version approved by the operator;
when the software version of the electronic device is not identical or the higher version than the software version approved by the operator, providing the first software information to the electronic device; and
when the software version of the electronic device is identical to or the higher version than the software version approved by the operator, providing the second software information to the electronic device.

14. A method for receiving software from an electronic device, comprising:
transmitting device information and software information about an electronic device to a software providing device through a communication module;
receiving software information corresponding to the device information and the software information about the electronic device from the software providing device;
identifying whether the received software information is first software information or second software information customized for the first software based on a request of a designated operator; and
installing the first software based on the first software information or installing second software based on the second software information.

15. The method of claim 14, further comprising:
requesting and downloading first software corresponding to a country code from the software providing device, the first software information including the country code; or
downloading second software corresponding to an operator code from the software providing device, the second software information including the operator code,
wherein the device information about the electronic device includes an international mobile equipment identity (IMEI), and the software information about the electronic device includes version information about firmware equipped when the electronic device is manufactured or shipped out.
